# FASCICULE DE BREVET EUROPEEN

(11) **EP 1 613 450 B1**
(45) Date de publication et mention de la délivrance du brevet: **21.06.2006**
(21) Numéro de dépôt: 04742436.1
(22) Date de dépôt: 05.04.2004
(51) Int. Cl.: B24B 13/005, G02C 7/02, G02B 27/02

(54) **SYSTEME DE VISUALISATION DE MARQUAGES OPTIQUES D'UN VERRE OPHTALMIQUE, DISPOSITIF DE TAMPONNAGE ET PROCEDE D'ORIENTATION DE VERRES UTILISANT UN TEL SYSTEME**
SYSTEM ZUR SICHTBARMACHUNG VON OPTISCHEN MARKIERUNGEN AUF EINER OPHTHALMISCHEN LINSE, ENDBEARBEITUNGSVORRICHTUNG UND VERFAHREN ZUR AUSRICHTUNG VON LINSEN UNTER VERWENDUNG SOLCH EINES SYSTEMS
SYSTEM FOR VISUALISATION OF OPTICAL MARKINGS ON AN OPHTHALMIC LENS, FINISHING DEVICE AND METHOD FOR ORIENTATION OF LENSES USING SUCH A SYSTEM

(30) Priorité: 14.04.2003 FR 0304654
(43) Date de publication de la demande: 11.01.2006
(73) Titulaire: Tecoptique, 73000 Chambéry (FR)
(72) Inventeur: DEMARCHI, Henri, Dominico, F-73290 La Motte Servolex (FR); NACCARATO, Joseph, F-74150 Sales (FR)
(74) Mandataire: Jouvray, Marie-Andrée
(86) Numéro de dépôt international: PCT/FR2004/000843
(87) Numéro de publication internationale: WO 2004/091858

(56) Documents cités:
- FR-A- 2 115 966
- FR-A- 2 475 222
- US-A- 5 894 348
- US-A- 6 088 089
- DATABASE WPI Section EI, Week 197736 Derwent Publications Ltd., London, GB; Class S02, AN 1977-H4641Y XP002254048 -& SU 511 520 A (LENINGRAD PREC MECH OPTI) 9 septembre 1976 (1976-09-09)

## Description

### Domaine technique de l'invention

L'invention concerne un système de visualisation de marquages optiques d'un verre ophtalmique, comportant
- une source de lumière, fournissant un faisceau de lumière incident illuminant le verre ophtalmique,
- sur le trajet optique du faisceau incident, des moyens réfléchissants disposés en aval du verre ophtalmique et une lentille de collimation et de grossissement disposée en amont du verre ophtalmique,
- une caméra, la lentille, le verre ophtalmique et les moyens réfléchissants étant disposés sur un même axe optique principal.

### État de la technique

Classiquement, un laboratoire d'usinage de verres ophtalmiques progressifs utilise des verres ophtalmiques semi-finis, c'est-à-dire des verres ophtalmiques dont la face convexe progressive est finie et polie, pour usiner la face concave des verres ophtalmiques afin d'obtenir les puissances correctrices finales. Avant usinage, on se sert du tamponnage initial du fabricant, apposé sur la face convexe, pour indexer le verre ophtalmique. Après usinage, le verre ophtalmique est lavé et peut subir ensuite plusieurs traitements tels que durcissement, anti-reflets, etc... Le tamponnage initial doit alors être effacé. Après le traitement, le verre ophtalmique doit être de nouveau tamponné.

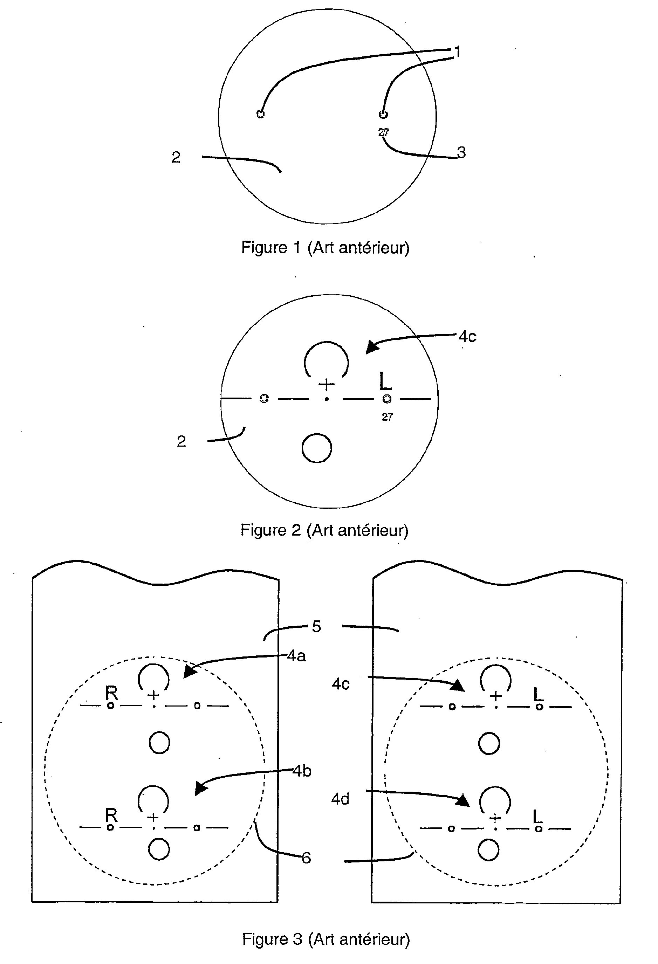

En règle générale, l'opérateur cherche les micro-gravures 1, représentées à la figure 1, caractéristiques d'un verre ophtalmique 2, et fait un point au feutre sur les deux micro-gravures 1. Ces deux micro-gravures sont généralement deux cercles présentant un entraxe constant de 34mm. Une référence 3 (« addition ») représentative de certaines propriétés du verre ophtalmique est également inscrite à côté d'un des deux cercle. Certains fabricants rajoutent d'autres micro-gravures d'identification du verre, par exemple un numéro, un code-barre, un code-points, etc... L'opérateur positionne ensuite manuellement le verre ophtalmique 2 sur une machine de tamponnage et lance le procédé de tamponnage. Pendant le tamponnage, représenté sur les figures 2 et 3, un motif 4c est apposé sur le verre ophtalmique 2. Deux motifs 4a et 4b, correspondants à un verre ophtalmique de droite, et deux motifs 4c et 4d, correspondants à un verre ophtalmique de gauche, sont gravés respectivement avec des rainures spécifiques dans des supports 5 de cliché gauche et droit, généralement fabriqués en acier ou en céramique. Le motif 4c à apposer est transposé par l'intermédiaire d'un encrier et d'un tampon qui récupère l'encre stockée dans la rainure du cliché 4c et l'appose sur les verres ophtalmiques 2. Les cercles en pointillés 6 correspondent à la position de l'encrier au repos.

Un opticien qui reçoit des verres ophtalmiques se sert du tamponnage pour indexer le verre ophtalmique et le détourer en fonction de la forme de la monture. Une fois le verre ophtalmique détouré et monté, le tamponnage est effacé à l'alcool.

Le marquage par feutre d'un verre ophtalmique a l'inconvénient d'être peu précis et, par exemple, de conduire à des erreurs de parallaxe.

### Objet de l'invention

L'invention a pour but de remédier à ces inconvénients et, en particulier, de permettre de localiser précisément et rapidement les marquages optiques d'un verre ophtalmique.

Selon l'invention, ce but est atteint par le fait que les moyens réfléchissants comportent une pluralité de faces planes réfléchissantes, agencées sous forme d'au moins un coin de cube ouvert en direction du verre ophtalmique.

Selon un développement de l'invention, six faces planes réfléchissantes, constituées par des miroirs, sont agencées sous forme de deux coins de cube, disposés de part et d'autre de l'axe optique principal.

Selon un autre développement de l'invention, les faces planes réfléchissantes, sous forme de coins de cubes, forment une matrice de coins de cube adjacents.

Selon une autre caractéristique de l'invention, le système comporte un verre teinté disposé sur l'axe optique principal, entre la lentille et le verre ophtalmique.

Selon un mode de réalisation préférentiel, le système comporte des moyens de rotation pour faire tourner les moyens réfléchissants autour de l'axe optique principal.

L'invention a également pour but un dispositif de tamponnage de verres ophtalmiques comportant au moins une unité d'encrage, une unité de tamponnage et au moins un système de visualisation selon l'invention.

L'invention a également pour but un procédé d'orientation de verres ophtalmiques, comportant la mise en place d'un verre ophtalmique sur un support et l'adaptation de la position du verre ophtalmique au moyen de marquages optiques visualisés par au moins un système de visualisation selon l'invention.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
Les figures 1 et 2 représentent un verre ophtalmique respectivement avant et après tamponnage.
La figure 3 montre des clichés gravés gauche et droit comprenant chacun deux motifs différents.
La figure 4 représente un dispositif de tamponnage comportant un système de visualisation selon l'invention.
Les figures 5 et 6 représentent des coins de cube respectivement en vue de dessous et en vue de dessus.
La figure 7 représente le fonctionnement d'un coin de cube.
La figure 8 illustre, en vue de dessus, un mode de réalisation particulier des moyens réfléchissants d'un système selon l'invention.
La figure 9 montre une image de moniteur correspondant à une caméra gauche et une caméra droite d'un dispositif selon l'invention.
La figure 10 montre un mode de réalisation particulier d'une source de lumière.
La figure 11 montre un mode de réalisation particulier d'un support de verre ophtalmique.
Les figures 12 à 14 illustrent le procédé de tamponnage selon l'invention.

### Description de modes particuliers de réalisation

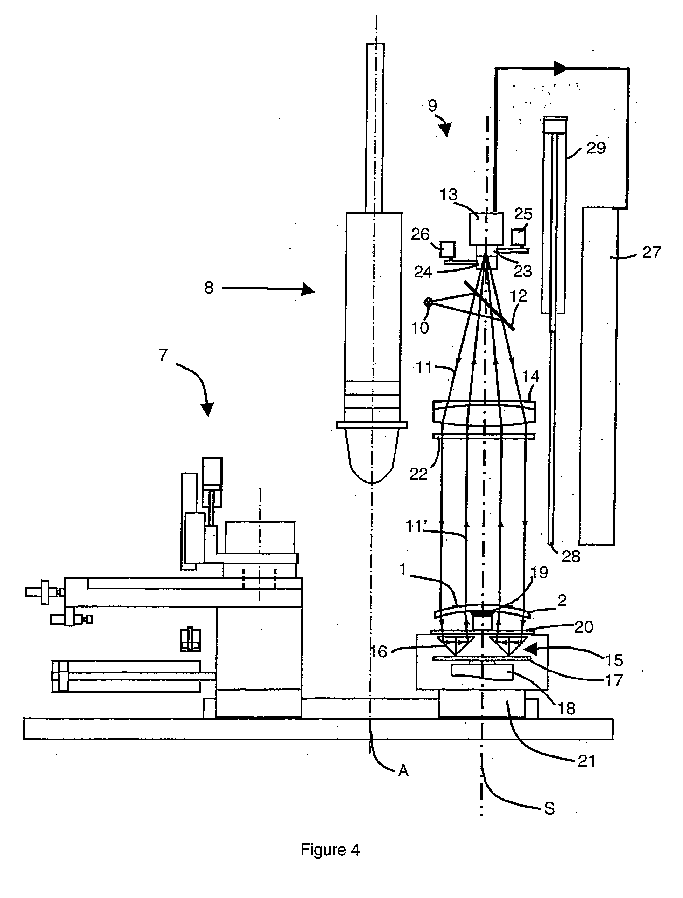

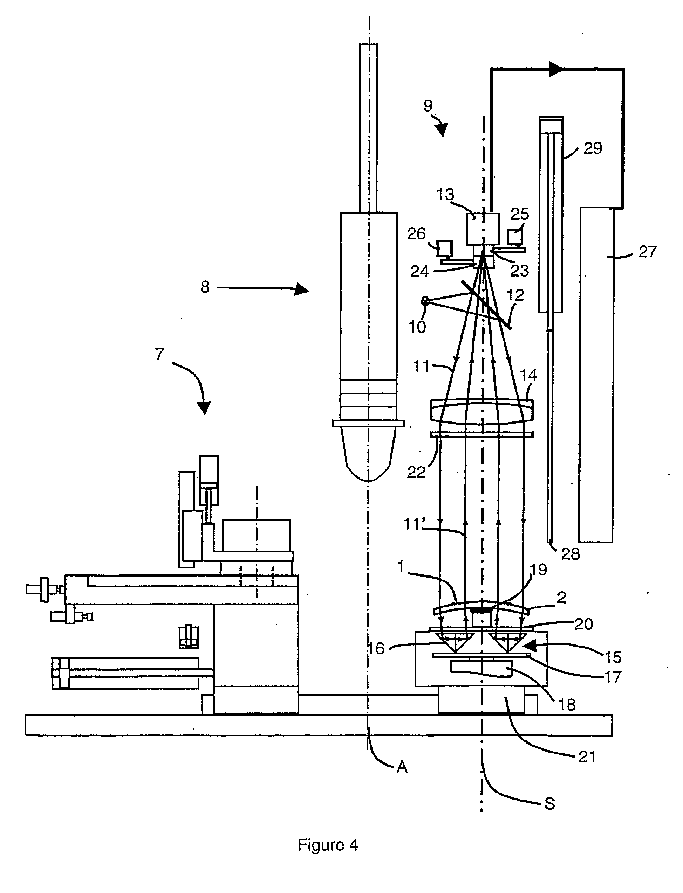

A la figure 4, un dispositif de tamponnage comporte une unité d'encrage 7, une unité de tamponnage 8 et un système 9 de visualisation de marquages optiques, par exemple de micro-gravures 1, d'un verre ophtalmique 2. Une source de lumière 10, par exemple constituée par une diode électroluminescente, est disposée à côté d'un axe optique principal S et fournit un faisceau 11 de lumière incident, celui-ci illumine le verre ophtalmique 2 par l'intermédiaire de moyens semi-réfléchissants 12, disposés sur l'axe optique principal S entre une caméra 13 et une lentille 14 de collimation et de grossissement. Les moyens semi-réfléchissants 12 réfléchissent le faisceau 11 de lumière incident en direction du verre ophtalmique 2 et transmettent un faisceau 11' de détection en provenance du verre ophtalmique 2 en direction de la caméra 13. Il est avantageux que la caméra 13 soit de type CCD (« charge coupled device ») haute résolution 795 (H) x 596(V). De préférence, on choisit une caméra à réglage de gain automatique (« AGC : Automatic Gain Control ») afin de conserver un temps d'intégration (temps d'exposition des cellules photosensibles) unique.

Les moyens semi-réfléchissants 12 peuvent être constitués, par exemple, par un miroir semi-réfléchissant, orienté à 45° par rapport à l'axe optique principal S, ou par un cube semi-réfléchissant. Cependant le miroir semi-réfléchissant est plus avantageux pour la réduction des aberrations optiques et moins encombrant. La lentille 14 de collimation et de grossissement peut être, par exemple, une lentille plan-convexe ou un doublet achromatique permettant de minimiser l'aberration sphérique.

Sur le trajet optique du faisceau 11 incident, des moyens réfléchissants 15 sont disposés en aval du verre ophtalmique 2 tandis que la lentille 13 de collimation et de grossissement est disposée en amont du verre ophtalmique 2. La caméra 13, la lentille 14, le verre ophtalmique 2 et les moyens réfléchissants 15 sont disposés sur le même axe optique principal S. Les moyens réfléchissants 15 comportent une pluralité de faces planes 16 réfléchissantes, agencées sous forme de coins de cube ouverts en direction du verre ophtalmique 2. Les faces planes 16 réfléchissantes peuvent être constituées par des miroirs. Sur la figure 4, deux coins de cube, disposés de part et d'autre de l'axe optique principal S, sont formés par six faces planes 16 réfléchissantes constituées par des miroirs.

Les moyens réfléchissants 15 sont fixés, par exemple collés, sur un disque 17 de maintien solidaire d'un moteur 18 constituant des moyens de rotation permettant de faire tourner les moyens réfléchissants 15 autour de l'axe optique principal S. Un équilibrage des moyens réfléchissants 15 et du disque 17 par rapport au moteur 18 est indispensable pour une rotation sans vibration. Le moteur 18, ayant typiquement une fréquence de rotation comprise entre 700 et 3000T/mn, permet d'homogénéiser l'éclairement de l'image durant le temps d'intégration de la caméra 13. Il contribue également à la suppression de l'image des arêtes des coins de cube.

Le verre ophtalmique 2 est maintenu par une ventouse 19 de fixation qui est reliée à un chariot 21. Une plaque de protection 20 transparente est disposée entre le verre ophtalmique 2 et les moyens réfléchissants 15, dans le but de protéger les moyens réfléchissants 15. La plaque de protection 20 est, de préférence, trempée et traitée anti-reflet des 2 faces. La ventouse 19 a typiquement un diamètre de 20mm et permet de maintenir le verre ophtalmique 2 par dépression pendant le tamponnage. Le matériau de la ventouse 19 ne laisse aucune trace sur la face concave des verres. L'ensemble constitué par le moteur 18 et les moyens réfléchissants 15, d'une part, et le verre ophtalmique 2, la ventouse 19 et la plaque de protection 20, d'autre part, peut être entraîné par le chariot 21, permettant de déplacer le verre ophtalmique 2 entre une position de tamponnage en regard d'un axe de tamponnage A et une position de visualisation en regard de l'axe optique principal S.

Le système 9 de visualisation comporte, de préférence, un verre teinté 22 disposé sur l'axe optique principal S entre la lentille 14 et le verre ophtalmique 2. Le verre teinté 22 peut être un verre du type verre solaire ou un verre polarisant. Il permet de diminuer l'éclairage afin de ne pas saturer la caméra 13 et donc de conserver un temps d'intégration optimale quelque soit le verre ophtalmique 2 utilisé. Le verre teinté 22 contribue également à la suppression de l'image des arêtes des coins de cube.

L'objectif de la caméra 13 doit être situé au foyer image de la lentille 14 afin d'éviter le vignetage et, ainsi, de conserver un bon rendement photométrique. L'objectif de la caméra 13 comporte des moyens 23 de réglage de la mise au point et des moyens 24 de réglage de l'ouverture de l'iris. Les réglages de l'iris et de la mise au point peuvent être effectués à distance par l'intermédiaire de deux servomoteurs, un servomoteur 25 pour la mise au point et un servomoteur 26 pour le réglage de l'ouverture de l'iris. Une ouverture minimum de l'iris est préférable pour avoir une meilleure définition. La diode électroluminescente constituant la source de lumière 10 peut avoir une longueur d'onde d'environ 650 nm et illuminer selon un angle de diffusion réduit. Cependant elle nécessite un diaphragme afin de régler précisément le faisceau de lumière. De plus, la diode peut être réglable en intensité. II est préférable d'avoir un éclairage puissant afin d'utiliser une ouverture de l'iris minimum.

Le dispositif de tamponnage, représenté sur la figure 4, comporte également un moniteur 27, par exemple à cristaux liquides, connecté à la caméra 13, et une porte de sécurité 28 pouvant être montée et descendue par un actionneur 29. II est préférable d'utiliser une caméra 13 alimentée en 5VDC et un moniteur 27 alimenté en 12VDC, afin d'éliminer les signaux parasites.

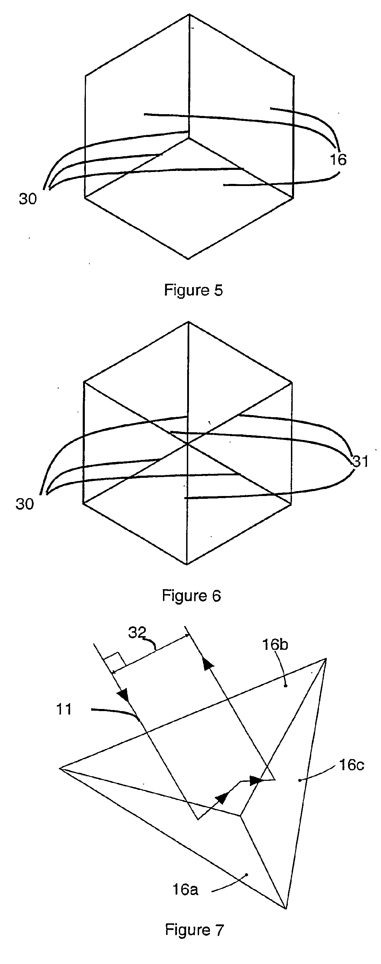

A la figure 5, une vue de dessous d'un coin de cube permet de distinguer les trois arêtes 30 des trois faces 16 du coin de cube, tandis que sur la figure 6, en vue de dessus, on voit également chacun des trois reflets 31 de chaque arête 30 dans la face 16 respectivement opposée.

Comme représenté à la figure 7, un faisceau 11 de lumière incident est réfléchi par une face plane 16a réfléchissante en direction d'une deuxième face plane 16b réfléchissant la lumière vers la troisième face plane 16c, celle-ci réfléchit la lumière dans une direction parallèle au faisceau 11 incident, mais sur un trajet optique décalé par rapport au faisceau 11 incident. Le décalage spatial 32 dépend de la position et de la direction du faisceau 11 incident et peut être au maximum de l'ordre de la dimension du coin de cube. Le coin de cube invertit une image constituée par plusieurs faisceaux 11 incidents.

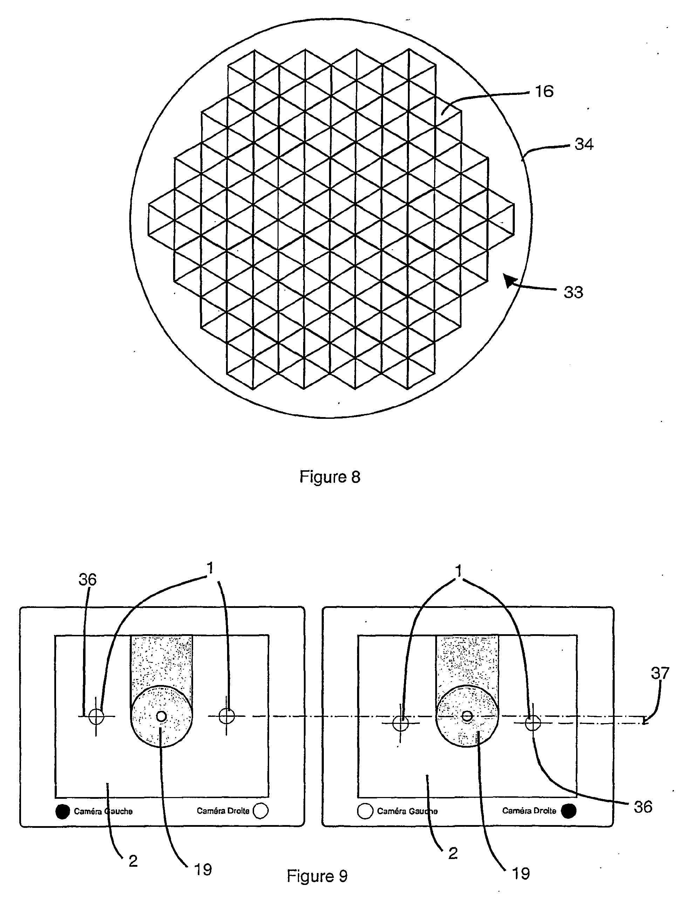

A la figure 8, une matrice 33 de coins de cube adjacents est disposée sur un support 34. Les faces planes 16 réfléchissantes sont constituées par des coins de cube massifs en matière plastique, par exemple en plastique moulé. Les faces planes 16 réfléchissantes peuvent également être constituées par des coins de cube creux en matière plastique ou par des coins de cube usinés dans un support métallique. Une matrice 33 de coins de cube adjacents permet de rendre le système 9 de visualisation insensible à la puissance optique du verre ophtalmique 2 utilisé.

La figure 9 représente l'image qui peut être affichée sur le moniteur 27. Le dispositif de tamponnage peut comporter deux systèmes 9 de visualisation, respectivement pour un verre ophtalmique 2 de droite et un verre ophtalmique de gauche. Ainsi, les images de deux caméras 13 peuvent être affichées alternativement sur le moniteur 27, ou simultanément dans le cas ou le dispositif comporte deux moniteurs. Chaque image représente un verre ophtalmique 2, des micro-gravures 1 et les moyens de support des verres ophtalmique 2, par exemple les ventouses 19. Sur l'écran du moniteur, des repères 36 sont marqués, permettant d'orienter chaque verre ophtalmique au moyen des micro-gravures 1 et des repères 36.

Pour orienter le verre ophtalmique 2, l'opérateur pose le verre sur la ventouse de fixation 19 et tourne légèrement le verre jusqu'à ce qu'il voie à l'écran les micro-gravures 1 ayant un entraxe de 34mm. Il positionne les deux micro-gravures 1 parfaitement dans les repères et crée le vide pour fixer le verre ophtalmique sur la ventouse de fixation 19.

Cependant, les rainures des motifs 4 ne sont jamais gravées à la bonne distance par rapport à un point de référence des supports 5 de cliché. On peut alors utiliser un logiciel qui permet d'insérer à l'écran les repères 36 et de mémoriser, pour chaque cliché, ses propres repères. Les positions des repères 36 de gauche et de droite, représentés sur la figure 9, présentent un décalage 37 vertical, dont on tient alors compte par l'intermédiaire du logiciel utilisé pour le traitement d'image. Afin de calibrer le dispositif de tamponnage, l'opérateur enregistre une référence du jeu de motifs 4 gravés sur les supports 5 de cliché. Il lance le procédé de tamponnage et visualise le verre ophtalmique tamponné sur l'écran du moniteur 27. Ensuite, par exemple simplement à l'aide d'une souris d'ordinateur, il superpose les repères 36 sur les cercles tamponnés, d'entraxe 34mm, pour localiser les micro-gravures 1. Ainsi, on peut utiliser différents jeux de clichés en utilisant l'étalonnage et les références des jeux de clichés sans calibrer après chaque changement de jeu de clichés.

Ainsi, le fonctionnement du système 9 de visualisation consiste à réaliser une image de la surface du verre ophtalmique 2 comportant les micro-gravures 1 sur une caméra de type CCD matriciel. Cependant, les micro-gravures 1 ne sont pas des inhomogénéités modulées en transmission comme, par exemple, des images imprimées, mais des inhomogénéités de phase. Leur contraste est donc faible si on les observe sans utiliser leurs propriétés de diffraction. Pour cela, le verre ophtalmique 2 est, de préférence, éclairé en lumière collimatée. Pour y parvenir, on peut utiliser une source de lumière 10 filtrée par un diaphragme situé au foyer de la lentille 14. D'autre part, afin de s'affranchir au maximum de la lumière ambiante non-collimatée on peut utiliser une diode électroluminescente à spectre étroit et placer un filtre centré sur sa longueur d'onde après la lentille 14. Le faisceau ainsi formé traverse le verre ophtalmique une première fois, subi une réflexion par les moyens réfléchissants 15, et traverse le verre ophtalmique une seconde fois. Il est alors focalisé au foyer de la lentille 14 où est placée l'entrée de l'objectif de la caméra 13. Ceci permet de collecter un maximum de flux et d'homogénéiser l'éclairement sur la surface de la caméra 13 en limitant le vignetage. Du point de vue de l'imagerie, le verre ophtalmique 2 portant les micro-gravures 1 doit être situé au foyer objet de la lentille 14. La lentille 14 renvoie alors l'image à l'infini, image qui est reprise par l'objectif de la caméra 13 pour se former dans le plan du détecteur. Le réglage en focalisation de l'objectif permet de relâcher les tolérances mécaniques de positionnement. Les coins de cube constituent les moyens réfléchissants 15 permettant de visualiser les micro-gravures 1 sur des verres de puissance non nulle. En effet, les coins de cube renvoient les faisceaux reçus parallèlement à leur angle d'arrivée. Repassant dans le verre ophtalmique 2 avec le même angle, ils ressortent de nouveau collimatés.

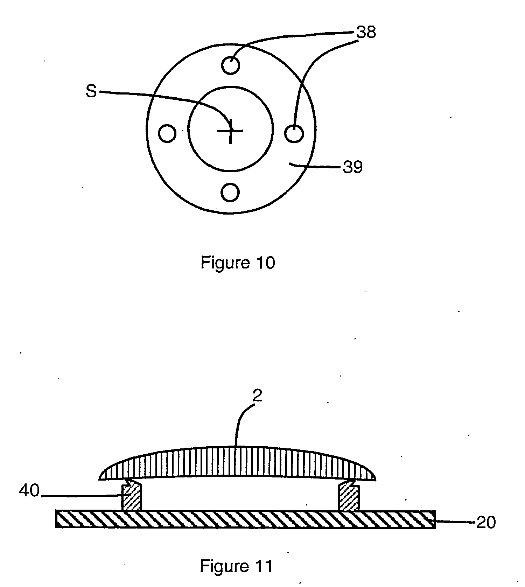

La figure 10 représente une variante de réalisation de la source de lumière 10, permettant de supprimer les moyens semi-réfléchissants 12. La source de lumière est un éclairage annulaire à diodes électroluminescentes 38, disposées autour de l'axe optique principal S, sur un support 39 en forme d'anneau. Le support 39 peut être fixé en amont de la lentille 14 de collimation et de grossissement, par exemple au niveau de l'objectif de la caméra 13. Les diodes électroluminescentes 38 peuvent également être remplacées par des fibres optiques.

La figure 11 représente une variante réalisation du support du verre ophtalmique. Ce support est constitué par un joint annulaire 40, par exemple un joint de type « V ring » ou un joint torique, disposé entre le verre ophtalmique 2 et la plaque de protection 20 qui devient (pour cette variante) également support de ventouse. Le joint annulaire 40 a typiquement un diamètre de 50mm et présente l'avantage d'être un moyen de support plus stable que la ventouse 19.

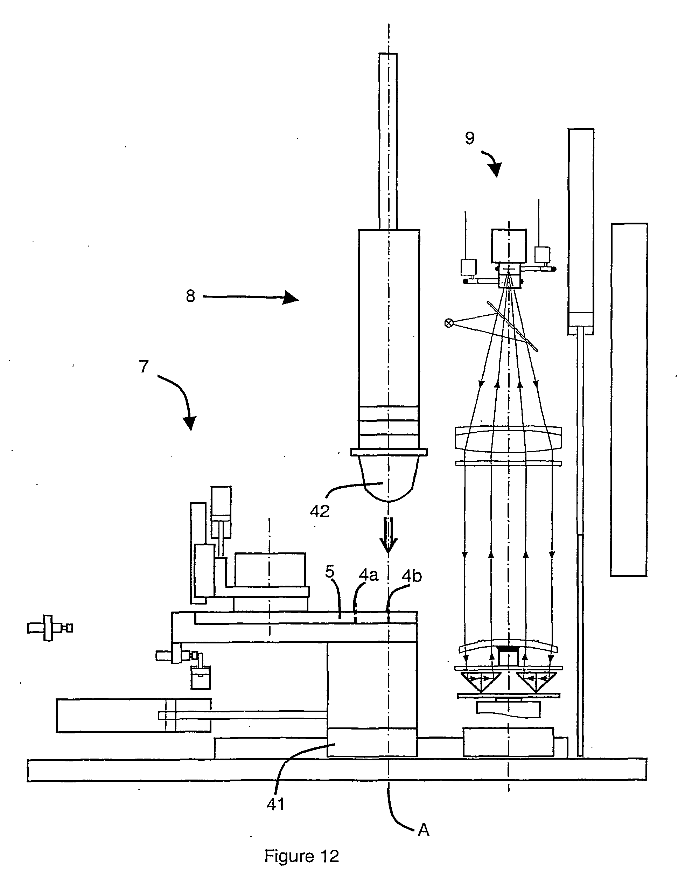

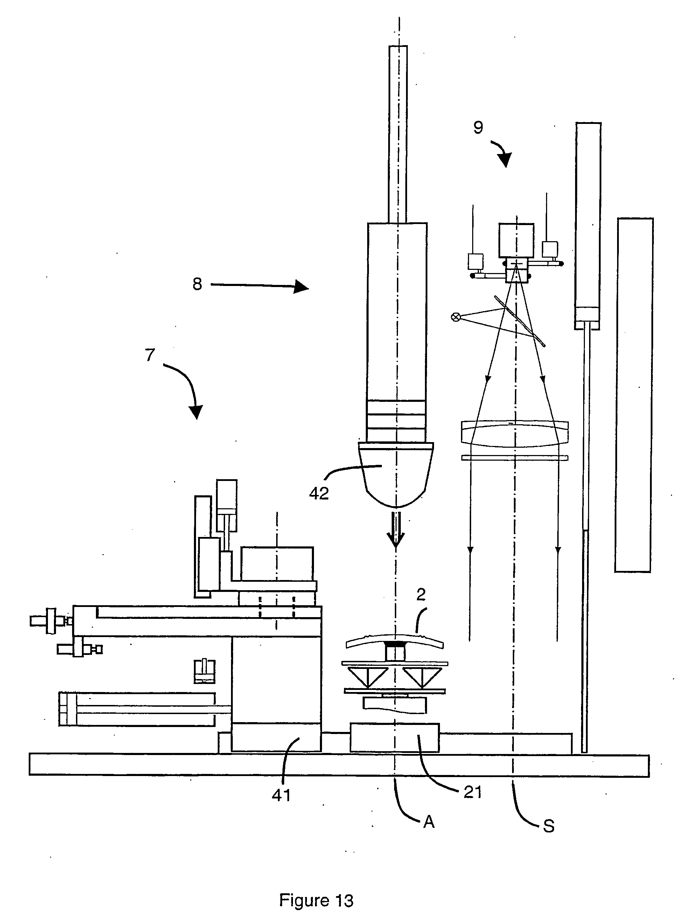

Les figures 12 et 13 montrent les étapes d'un procédé de tamponnage, effectué après positionnement d'un premier verre ophtalmique 2 à l'aide du système 9 de visualisation. A la figure 12, le support 5 de cliché avance sur un système de guidage linéaire 41, de manière à positionner un premier motif 4b sous l'unité de tamponnage 8, disposée sur l'axe de tamponnage A. Comme représenté par une flèche à la figure 12, l'unité de tamponnage est actionnée, de manière à ce que la tête de tamponnage 42 vienne en contact avec le premier motif 4b pour reporter ce motif sur la tête de tamponnage 42. Ensuite, le support 5 de cliché recule et le chariot 21 portant le premier verre ophtalmique 2 se déplace jusqu'à l'axe de tamponnage A. Comme représenté à la figure 13, l'unité de tamponnage est alors actionnée de manière à ce que la tête de tamponnage 42 vienne en contact avec le premier verre ophtalmique 2 pour apposer le premier motif 4b sur le premier verre ophtalmique 2.

De préférence, le dispositif de tamponnage comporte deux systèmes de visualisation et deux unités de tamponnage, l'unité d'encrage comprenant deux supports 5 de cliché comme, par exemple, les supports 5 de cliché représentés sur la figure 3. Ceci permet le tamponnage simultané de deux verres ophtalmiques, typiquement un verre ophtalmique droit (R) et un verre ophtalmique gauche (L). En effet, le procédé de tamponnage d'un deuxième verre ophtalmique peut être effectué de manière analogue aux étapes du procédé précédent. Les motifs 4b et 4d sont ainsi simultanément reportés par les deux unités de tamponnage, respectivement sur les verres ophtalmiques droit et gauche.

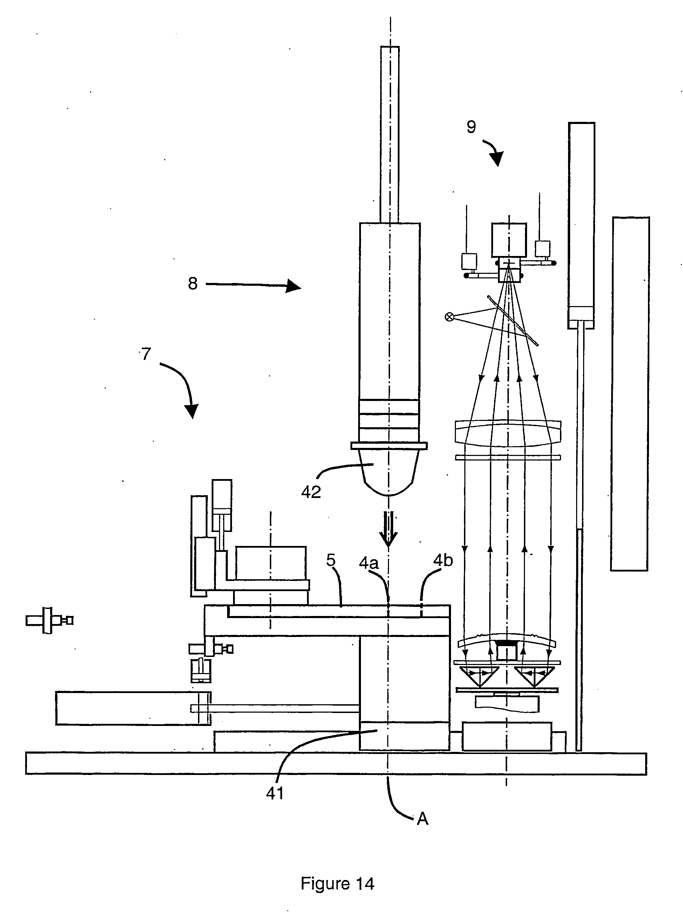

Comme représenté à la figure 3, les supports 5 de cliché peuvent comporter deux motifs 4a et 4b différents, destinés à des verres ophtalmique de droite différents, et deux motifs 4c et 4d différents, destinés à des verres ophtalmique de gauche différents. Ainsi, le dispositif de tamponnage représenté sur les figures 12 et 13, permet d'effectuer le tamponnage d'une autre paire de verres ophtalmiques droit et gauche, nécessitant un troisième motif 4a et un quatrième motif 4c, en utilisant la même paire de supports 5 de clichés. En effet, comme illustré à la figure 14, les supports 5 de cliché sont déplacés, de manière à positionner le troisième motif 4a vis-à-vis de la tête de tamponnage 42. De manière analogue, le quatrième motif 4c est déplacé vis-à-vis de la tête de tamponnage correspondante.

Un dispositif comportant l'unité d'encrage 7, l'unité de tamponnage 8 et deux systèmes 9 de visualisation selon l'invention, présente des dimensions réduites et peut se mettre sur un plan de travail. L'unité de tamponnage a 2 têtes de tamponnage, respectivement pour un verre ophtalmique droit, et pour un verre ophtalmique gauche. L'opérateur positionne manuellement les verres ophtalmiques 2 sur le support des verres en se servant de deux systèmes 9 de visualisation, respectivement pour un verre ophtalmique droit pour un verre ophtalmique gauche. Le dispositif est cependant, de préférence, équipé d'un seul écran 27, le passage d'une caméra à l'autre se faisant par un sélecteur. Un tel dispositif permet d'éviter les erreurs de parallaxe et de tamponner les verres ophtalmiques 2 avec une grande précision.

L'invention n'est pas limitée aux modes particuliers de réalisation décrits et représentés ci-dessus. En particulier, le système 9 de visualisation peut être utilisé sans faire de tamponnage, mais uniquement pour identifier ou orienter pour ensuite faire un contrôle, une micro-gravure supplémentaire ou une autre opération. Le système 9 de visualisation est particulièrement approprié dans le cas de verre ophtalmique progressifs mais peut également être utilisé pour tout type de verre ophtalmique.

## Revendications

1. Système (9) de visualisation de marquages optiques d'un verre ophtalmique, comportant
- une source de lumière (10), fournissant un faisceau (11) de lumière incident illuminant le verre ophtalmique (2),
- sur le trajet optique du faisceau (11) incident, des moyens réfléchissants (15) disposés en aval du verre ophtalmique (2) et une lentille (14) de collimation et de grossissement disposée en amont du verre ophtalmique (2),
- une caméra (13), la lentille (14), le verre ophtalmique (2) et les moyens réfléchissants (15) étant disposés sur un même axe optique principal (S), système **caractérisé en ce que**
les moyens réfléchissants (15) comportent une pluralité de faces planes (16) réfléchissantes, agencées sous forme d'au moins un coin de cube ouvert en direction du verre ophtalmique (2).

2. Système selon la revendication 1, **caractérisé en ce que** les faces planes (16) réfléchissantes sont constituées par des coins de cubes massifs en matière plastique.

3. Système selon la revendication 1, **caractérisé en ce que** les faces planes (16) réfléchissantes sont constituées par des coins de cubes creux en matière plastique.

4. Système selon la revendication 1, **caractérisé en ce que** les faces planes (16) réfléchissantes sont constituées par des miroirs.

5. Système selon la revendication 4, **caractérisé en ce qu'**il comporte six faces planes (16) réfléchissantes constituées par des miroirs, agencées sous forme de deux coins de cube, disposés de part et d'autre de l'axe optique principal (S).

6. Système selon l'une quelconque des revendications 1 à 4, **caractérisé en ce que** les faces planes (16) réfléchissantes, sous forme de coins de cubes forment une matrice (33) de coins de cube adjacents.

7. Système selon l'une quelconque des revendications 1 à 6, **caractérisé en ce qu'**il comporte un verre teinté (22) disposé sur l'axe optique principal (S), entre la lentille (14) et le verre ophtalmique (2).

8. Système selon l'une quelconque des revendications 1 à 7, **caractérisé en ce que** la source de lumière (10) est constituée par une diode électroluminescente disposée à côté de l'axe optique principal (S), le faisceau (11) de lumière incident illuminant le verre ophtalmique (2) par l'intermédiaire de moyens semi-réfléchissants (12) disposés sur l'axe optique principal (S), entre la lentille et la caméra.

9. Système selon l'une quelconque des revendications 1 à 7, **caractérisé en ce que** la source de lumière (10) comporte plusieurs diodes électroluminescentes (38), disposées en anneau autour de l'axe optique principal (S), en amont de la lentille (14).

10. Système selon l'une quelconque des revendications 1 à 9, **caractérisé en ce qu'**il comporte une plaque de protection (20) transparente entre le verre ophtalmique (2) et les moyens réfléchissants (15) et une ventouse (19) de fixation, disposée entre le verre ophtalmique (2) et la plaque de protection (20).

11. Système selon l'une quelconque des revendications 1 à 9, **caractérisé en ce qu'**il comporte une plaque de protection (20) transparente entre le verre ophtalmique (2) et les moyens réfléchissants (15) et un joint annulaire (40) disposé entre le verre ophtalmique (5) et la plaque de protection (20).

12. Système selon l'une quelconque des revendications 1 à 11, **caractérisé en ce qu'**il comporte des moyens (18) de rotation pour faire tourner les moyens réfléchissants (15) autour de l'axe optique principal (S).

13. Dispositif de tamponnage de verres ophtalmiques (2) comportant au moins une unité d'encrage (7), une unité de tamponnage (8) et des moyens de visualisation, dispositif **caractérisé en ce que** les moyens de visualisation sont constitués par au moins un système (9) de visualisation selon l'une quelconque des revendications 1 à 12.

14. Procédé d'orientation de verres ophtalmiques, comportant la mise en place d'un verre ophtalmique (2) sur un support (19, 40) et l'adaptation de la position du verre ophtalmique (2) au moyen de marquages optiques visualisés par des moyens de visualisation, **caractérisé en ce que** les moyens de visualisation sont constitués par au moins un système (9) de visualisation selon l'une quelconque des revendications 1 à 12.

## Claims

1. System (9) for visualisation of optical markings of an ophthalmic lens, comprising
- a light source (10), supplying an incident light beam (11) illuminating the ophthalmic lens (2),
- on the optical path of the incident beam (11), reflecting means (15) arranged downstream from the ophthalmic lens (2) and a collimation and magnifying lens (14) arranged upstream from the ophthalmic lens (2),
- a camera (13), the lens (14), the ophthalmic lens (2) and the reflecting means (15) being arranged on the same main optical axis (S),
system **characterized in that**
the reflecting means (15) comprise a plurality of flat reflecting faces (16), arranged in the form of at least one cube corner block open in the direction of the ophthalmic lens (2).

2. System according to claim 1, **characterized in that** the flat reflecting faces (16) are constituted by solid cube corner blocks made of plastic.

3. System according to claim 1, **characterized in that** the flat reflecting faces (16) are constituted by hollow cube corner blocks made of plastic.

4. System according to claim 1, **characterized in that** the flat reflecting faces (16) are formed by mirrors.

5. System according to claim 4, **characterized in that** it comprises six flat reflecting faces (16) formed by mirrors, arranged in the form of two cube corner blocks, arranged on each side of the main optical axis (S).

6. System according to any one of the claims 1 to 4, **characterized in that** the flat reflecting faces (16), in the form of cube corner blocks form a matrix (33) of adjacent cube corner blocks.

7. System according to any one of the claims 1 to 6, **characterized in that** it comprises a tinted lens (22) arranged on the main optical axis (S), between the lens (14) and the ophthalmic lens (2).

8. System according to any one of the claims 1 to 7, **characterized in that** the light source (10) is formed by a light-emitting diode arranged next to the main optical axis (S), the incident light beam (11) illuminating the ophthalmic lens (2) by means of the semi-reflecting means (12) arranged on the main optical axis (S), between the lens and the camera.

9. System according to any one of the claims 1 to 7, **characterized in that** the light source (10) comprises several light-emitting diodes (38), arranged in a ring around the main optical axis (S), upstream from the lens (14).

10. System according to any one of the claims 1 to 9, **characterized in that** it comprises a transparent protective plate (20) between the ophthalmic lens (2) and the reflecting means (15) and a fixing suction pad (19) arranged between the ophthalmic lens (2) and the protective plate (20).

11. System according to any one of the claims 1 to 9, **characterized in that** it comprises a transparent protective plate (20) between the ophthalmic lens (2) and the reflecting means (15) and an annular seal (40) arranged between the ophthalmic lens (2) and the protective plate (20).

12. System according to any one of the claims 1 to 11, **characterized in that** it comprises rotation means (18) to make the reflecting means (15) rotate around the main optical axis (S).

13. Device for stamp-marking ophthalmic lenses (2) comprising at least one inking unit (7), a stamp-marking unit (8) and visualisation means, device **characterized in that** the visualisation means are formed by at least one visualisation system (9) according to any one of the claims 1 to 12.

14. Method for orienting ophthalmic lenses, comprising placing an ophthalmic lens (2) on a support (19, 40) and adjusting the position of the ophthalmic lens (2) by means of optical markings visualised by the visualisation means, **characterized in that** the visualisation means are formed by at least one visualisation system (9) according to any one of the claims 1 to 12.

## Patentansprüche

1. System (9) zum Sichtbarmachen optischer Markierungen eines Augenglases, das
- eine Lichtquelle (10), die einen einfallenden Lichtstrahl (11) erzeugt, der das Augenglas (2) beleuchtet,
- auf der optischen Bahn des einfallenden Strahls (11) reflektierende Mittel (15), die hinter dem Augenglas (2) angeordnet sind, und eine Bündelungs- und Vergrößerungslinse (14), die vor dem Augenglas (2) angeordnet ist,
- sowie eine Kamera (13) umfasst, wobei die Linse (14), das Augenglas (2) und die reflektierenden Mittel (15) auf ein und derselben optischen Hauptachse (S) angeordnet sind,
ein System, das **dadurch gekennzeichnet ist, dass**
die reflektierenden Mittel (15) mehrere ebene, reflektierende Seiten (16) umfassen, die in Form mindestens eines Kubuswinkels vorgesehen sind, der zum Augenglas (2) hin offen ist.

2. System nach Anspruch 1, **dadurch gekennzeichnet, dass** die ebenen, reflektierenden Seiten (16) von massiven Kubuswinkeln aus Kunststoff gebildet werden.

3. System nach Anspruch 1, **dadurch gekennzeichnet, dass** die ebenen, reflektierenden Seiten (16) von hohlen Kubuswinkeln aus Kunststoff gebildet werden.

4. System nach Anspruch 1, **dadurch gekennzeichnet, dass** die ebenen, reflektierenden Seiten (16) von Spiegeln gebildet werden.

5. System nach Anspruch 4, **dadurch gekennzeichnet, dass** es sechs ebene, reflektierende Seiten (16) umfasst, die von Spiegeln gebildet werden, die in Form zweier Kubuswinkel vorgesehen sind, die beidseits der optischen Hauptachse (S) angeordnet sind.

6. System nach einem der Ansprüche 1 bis 4, **dadurch gekennzeichnet, dass** die ebenen, reflektierenden Seiten (16) in Form von Kubuswinkeln eine Matrix (33) aus aneinander angrenzenden Kubuswinkeln bilden.

7. System nach einem der Ansprüche 1 bis 6, **dadurch gekennzeichnet, dass** es ein getöntes Glas (22) umfasst, das auf der optischen Hauptachse (S) zwischen der Linse (14) und dem Augenglas (2) angeordnet ist.

8. System nach einem der Ansprüche 1 bis 7, **dadurch gekennzeichnet, dass** die Lichtquelle (10) von einer LED-Diode gebildet wird, die seitlich der optischen Hauptachse (S) angeordnet ist, wobei der einfallende Lichtstrahl (11) das Augenglas (2) mittels halbreflektierender Mittel (12) beleuchtet, die auf der optischen Hauptachse (S) zwischen Linse und Kamera angeordnet sind.

9. System nach einem der Ansprüche 1 bis 7, **dadurch gekennzeichnet, dass** die Lichtquelle (10) mehrere LED-Dioden (38) umfasst, die vor der Linse (14) ringförmig um die optische Hauptachse (S) angeordnet sind.

10. System nach einem der Ansprüche 1 bis 9, **dadurch gekennzeichnet, dass** es zwischen dem Augenglas (2) und den reflektierenden Mitteln (15) eine transparente Schutzplatte (20) sowie zwischen dem Augenglas (2) und der Schutzplatte (20) eine saugnapfartige Haltevorrichtung (19) umfasst.

11. System nach einem der Ansprüche 1 bis 9, **dadurch gekennzeichnet, dass** es zwischen dem Augenglas (2) und den reflektierenden Mitteln (15) eine transparente Schutzplatte (20) sowie zwischen dem Augenglas (2) und der Schutzplatte (20) eine ringförmige Dichtung (40) umfasst.

12. System nach einem der Ansprüche 1 bis 11, **dadurch gekennzeichnet, dass** es Mittel zum Drehen (18) umfasst, um die reflektierenden Mittel (15) um die optische Hauptachse (S) drehen zu lassen.

13. Vorrichtung zum Bedrucken von Augengläsem (2) durch Tampondruck, die mindestens eine Einheit (7) zum auftragen des Farbmittels, eine Tampondruckeinheit (8) sowie Mittel zum Sichtbarmachen umfasst, eine Vorrichtung, die **dadurch gekennzeichnet ist, dass** die Mittel zum Sichtbarmachen aus mindestens einem System (9) zum Sichtbarmachen nach einem der Ansprüche 1 bis 12 bestehen.

14. Vorrichtung zur Ausrichtung von Augengläsern, die das Anbringen eines Augenglases (2) auf einem Träger (19, 40) und das Einstellen der Position des Augenglases (2) mittels optischer Markierungen umfasst, die mit Mitteln zum Sichtbarmachen sichtbar gemacht werden, **dadurch gekennzeichnet, dass** die Mittel zum Sichtbarmachen aus mindestens einem System (9) zum Sichtbarmachen nach einem der Ansprüche 1 bis 12 bestehen.
